Europäisches Patentamt

European Patent Office

Office européen des brevets

(11) Numéro de publication: **0 166 661**
**A2**

# (12) DEMANDE DE BREVET EUROPEEN

(21) Numéro de dépôt: **85401271.3**

(22) Date de dépôt: **25.06.85**

(51) Int. Cl.⁴: **F 24 J 2/04**

(30) Priorité: **25.06.84 FR 8410563**

(43) Date de publication de la demande: **02.01.86**
**Bulletin 86/1**

(84) Etats contractants désignés: **AT BE CH DE FR GB IT LI LU NL SE**

(71) Demandeur: **Vironneau, Pierre, 2, rue Jean-Moulin, F-31120 Portet sur Garonne (FR)**
Demandeur: **Prunet, Jean, Domaine de la Terrasse, F-31450 Montgiscard (FR)**

(72) Inventeur: **Vironneau, Pierre, 2, rue Jean-Moulin, F-31120 Portet sur Garonne (FR)**
Inventeur: **Prunet, Jean, Domaine de la Terrasse, F-31450 Montgiscard (FR)**

(74) Mandataire: **Morelle, Guy Georges Alain, Cabinet SCOPI 1, Avenue de Rangueil, F-31400 Toulouse (FR)**

(54) **Dispositif de captage et de transfert d'énergie de rayonnement tel que le rayonnement solaire.**

(57) L'invention a pour objet un dispositif de captage d'un rayonnement émis de façon non continue.

Le dispositif comprend un premier circuit primaire parcouru par un premier fluide volatil, ce circuit comportant, montés en série, un réservoir (30) et des canaux (31) aptes à être soumis au rayonnement (33) et à prendre deux températures suivant respectivement la présence ou l'absence de rayonnement, et un conduit de récupération (40, 46), un deuxième circuit secondaire (19, 13, 20) parcouru par un second fluide, ce deuxième circuit étant isolé thermiquement, un échangeur thermique à deux voies (13, 43), une première voie (43) étant montée en série dans le conduit de récupération (40, 46), et la deuxième voie (13) dans le circuit secondaire, et des moyens pour maintenir la partie du conduit de récupération montée entre les canaux (31) et la première voie (43) à une température comprise entre deux valeurs déterminées.

Application à la récupération de l'énergie solaire.

DISPOSITIF DE CAPTAGE ET DE TRANSFERT D'ENERGIE
DE RAYONNEMENT TEL QUE LE RAYONNEMENT SOLAIRE.

La présente invention concerne les dispositifs de captage et de transfert d'énergie, plus particulièrement les dispositifs ou capteurs dits solaires permettant de capter l'énergie donnée par le rayonnement solaire.

On connaît déjà un dispositif comprenant essentiellement deux circuits, un circuit primaire et un circuit secondaire, le circuit primaire étant apte à être parcouru par un liquide volatil pouvant changer de phase très facilement.

Un tel dispositif a déjà été décrit dans de nombreux documents. Il comprend essentiellement un absorbeur constitué par exemple par une pluralité de canaux adaptés au type de capteur solaire situés les uns à côté des autres sous une fenêtre réalisée en un matériau transparent aux rayonnements dont il est nécessaire de capter l'énergie. L'énergie ainsi rayonnée est absorbée par ces canaux généralement noircis et recueillie par un fluide parcourant ces canaux, ce fluide étant constitué par un liquide volatil dont les changements de phase se font très facilement.

Le dispositif comprend aussi des moyens d'échanges thermiques agencés pour recevoir l'énergie recueillie par l'absorbeur et pour la transférer à un fluide secondaire circulant, par exemple, à l'intérieur d'une enceinte de stockage dans laquelle sont immergés des moyens d'échanges thermiques, comme par exemple un serpentin, des tubulures reliant les canaux à ces moyens d'échanges thermiques.

Le dispositif comprend aussi, bien entendu, un réservoir de ce liquide volatil qui est généralement disposé, lorsque le dispositif est en position de fonctionnement, au-dessous du plan de l'absorbeur et mis en communication, d'une part avec ce dernier par des moyens de conduites, par exemple constitués d'un ou d'une pluralité de conduits reliés aux points les plus bas de l'absorbeur et plongeant dans le liquide contenu dans ce réservoir, de préférence constamment en dessous de son niveau le plus bas dans ce réservoir, et d'autre part avec les moyens d'échanges thermiques par des moyens d'écoulement qui peuvent être, eux aussi, formés d'un ou de plusieurs conduits, qui sont agencés pour déboucher dans le réservoir qui est, lui aussi, disposé en-dessous du point le plus de ces moyens d'échanges thermiques, dans une position de fonctionnement du dispositif.

Enfin, le dispositif comprend aussi des moyens de canalisations formés essentiellement d'un collecteur reliant les points les plus hauts des canaux constituant l'absorbeur aux moyens d'échanges thermiques.

Aussi, le réservoir, les moyens de conduites, l'absorbeur, les moyens de canalisations, les moyens d'échanges thermiques et les moyens de retour forment-ils un circuit fermé dans lequel est apte à circuler le liquide volatil sous quelque phase que ce soit, soit en phase vapeur, soit en phase liquide, soit, même, dans les deux phases à la fois, selon le processus décrit ci-après.

Sous l'effet d'un rayonnement solaire, en début de période diurne, l'absorbeur et le réservoir sont alors réchauffés à une température plus élevée que celle régnant dans l'enceinte de stockage de chaleur, de sorte que le liquide volatil contenu dans ce réservoir entre en ébullition et remonte dans les canaux de l'absorbeur sous l'effet, d'une part de la surpression croissante du gaz contenu et emprisonné au-dessus du niveau du liquide dans le réservoir, et d'autre part d'un certain entraînement du liquide par les bulles gazeuses formées au moment de l'ébullition. Après un certain temps de fonctionnement, la circulation est amorcée dans le circuit primaire. Ce circuit est alors le seuil d'une dépression créée par la condensation du gaz lorsque celui-ci atteint les parties plus froides du circuit, c'est-à-dire essentiellement les moyens d'échanges thermiques. Après amorçage, le liquide volatil qui remonte dans les canaux de l'absorbeur subit un échauffement très important sous l'effet des rayonnements solaires irradiant la surface réceptrice de l'absorbeur. Le liquide se vaporise alors instantanément, de sorte que la vapeur formée et aspirée, toujours par dépression, à travers les moyens de canalisations vers les moyens d'échanges thermiques, se condense pour transmettre des calories au fluide secondaire contenu dans l'enceinte. Le condensat de ce fluide primaire retourne ensuite à l'état liquide vers le réservoir à travers les moyens d'écoulement. Le cycle continue ainsi tant que le rayonnement persiste. Au cours de ce cycle, le liquide volatil à changement facile de phase prélève par évaporation les calories du rayonnement solaire absorbé par les canaux de l'absorbeur et les cède, lors de la condensation, au liquide du circuit secondaire dans les moyens d'échanges thermiques.

Un tel dispositif est d'un rendement très élevé du fait de l'importance de la chaleur latente de vaporisation du liquide primaire et ne nécessite pas la présence sur son circuit primaire d'organe mécanique ou électrique pour obtenir ce transfert de calories.

Il est à noter que le réservoir est disposé en-dessous du point le plus bas des moyens d'échanges thermiques et que le circuit primaire contient une quantité de liquide volatil tel que le niveau de ce liquide à l'état entièrement condensé soit situé au-dessous du point le plus bas des moyens d'échanges thermiques, pour tenter d'éviter un cycle inverse en période froide, c'est-à-dire, par exemple, pendant les périodes nocturnes. Cependant, en période nocturne, comme les moyens d'échanges thermiques peuvent alors se trouver à une température plus élevée que celle de l'absorbeur, une partie du liquide volatil peut avoir tendance à remonter par vaporisation à travers les moyens d'échanges thermiques ou la vapeur se condenserait dans les conduits, le collecteur et les canaux.

La présente invention a pour but de pallier ces inconvénients. Elle a aussi pour but de réaliser un dispositif entièrement statique qui permet d'éviter, en période nocturne, un cycle de fonctionnement inverse à celui du cycle diurne, et donc d'éviter une déperdition d'énergie calorifique qui aurait été emmagazinée pendant les périodes diurnes.

Plus précisément, la présente invention a pour objet un dispositif de captage et de transfert d'un rayonnement émis de façon non continue, caractérisé par le fait qu'il comporte :

- un premier circuit dit circuit primaire apte à être parcouru par un premier fluide ayant une qualité de volatilité importante, cedit circuit primaire comportant, montés en série, d'une part un réservoir dudit premier fluide en phase liquide et des canaux aptes à être soumis audit rayonnement et à prendre au moins deux températures $t_1$ et $t_4$ suivant respectivement la présence ou l'absence de rayonnement, $t_4$ étant définie inférieure à $t_1$, et d'autre part un conduit de récupération,

- un deuxième circuit dit circuit secondaire apte à être parcouru par un second fluide, cedit circuit secondaire étant substantiellement isolé thermiquement,

- un échangeur thermique fluidique à au moins une première et une seconde voies, la première voie étant montée en série dans ledit conduit de récupération, et la deuxième voie dans ledit circuit secondaire, de façon à ce que ledit second fluide soit amené à une température $t_2$, $t_2$ étant apte à être comprise entre $t_1$ et $t_4$, quand lesdits canaux soumis au rayonnement sont amenés à la température $t_1$, et

- des moyens pour maintenir la partie dudit conduit de récupération montée entre lesdits canaux et ladite première voie de l'échangeur à une température $t_3$ ayant une

valeur comprise entre $t_2$ et $t_4$.

D'autres caractéristiques et avantages de la présente invention apparaîtront au cours de la description suivante donnée en regard des dessins annexés à titre illustratif mais nullement limitatif, dans lesquels :

- la FIGURE 1 représente, vu longitudinalement et en coupe partielle, un mode de réalisation d'un dispositif selon l'invention, et

- la FIGURE 2 représente, en vue de dessus simplifiée partiellement écorchée selon essentiellement la coupe C-C de la FIGURE 1, le mode de réalisation du dispositif selon cette même FIGURE 1.

Les deux FIGURES représentant un même mode réalisation, les mêmes références désignent les mêmes éléments et, en conséquence, pour la compréhension de la présente description, il sera nécessaire de se reporter indifféremment à l'une ou l'autre des deux FIGURES, suivant qu'apparaissent de façon visible ou non les éléments désignés.

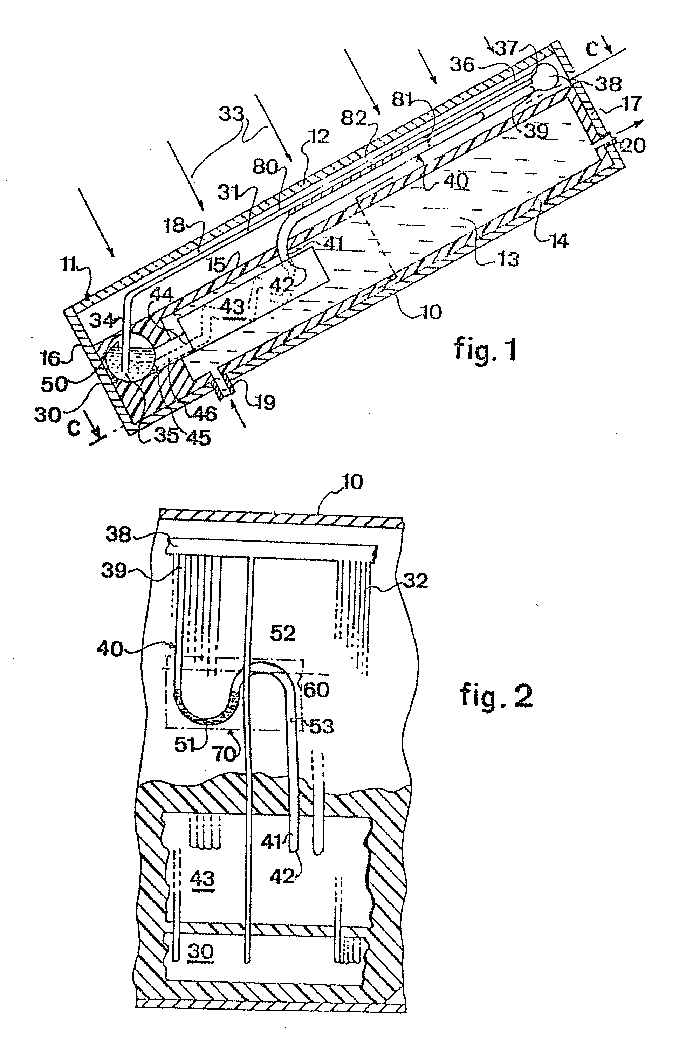

Le dispositif de captage et de transfert d'énergie de rayonnement illustré sur les FIGURES 1 et 2 comprend un caisson 10 dont un des côtés 11 est fermé par une paroi 12 réalisée en un matériau transparent à la longueur d'onde ou aux longueurs d'ondes du rayonnement dont il est nécessaire de capter l'énergie.

Dans le cas d'un rayonnement solaire, ce matériau sera essentiellement constitué par une fenêtre en verre. Le caisson 10 enferme une enceinte 13 noyée dans un matériau isolant 14 dont la surface supérieure 15 délimite avec les deux côtés latéraux 16 et 17 du caisson 10 un espace étanche, ou relativement étanche, 18 qui peut être éventuellement rempli d'un gaz neutre comme de l'azote. Bien entendu, cette enceinte 13 comporte une entrée 19 d'un fluide tel que, par exemple, de l'eau et une sortie 20 de ce même fluide. Cette partie de circuit comprise entre l'entrée 19 et la sortie 20 constitue une deuxième voie d'un échangeur thermique. Dans une position normale de fonctionnement, l'entrée 19 est généralement située à un point bas tandis que la sortie 20 est située à un point plus haut. Cette enceinte 13 est apte à être parcourue par un fluide tel que, par exemple, de l'eau. Aux entrées 19 et 20 sont généralement connectés en série ou en parallèle des éléments d'un circuit dit secondaire qui sont, par exemple, des chauffe-eau, des radiateurs ou tout autre élément analogue qui peut utiliser les calories qui seront récupérées par ce fluide.

Le dispositif illustré comprend en plus un réservoir 30 d'un fluide très volatil, comme par exemple un agent frigorifique ou un mélange d'agents frigorifiques tels que du produit connu sous le nom commercial de Fréon, ou du chlorure d'éthyle, ammoniaque, alcool, etc. Ce réservoir 30 est partiellement isolé notamment par le matériau 14 isolant l'enceinte 13. A ce réservoir 30 sont associés des moyens de canaux 31, avantageusement d'une pluralité formant une nappe 32 disposée juste sous la fenêtre ou la paroi transparente 12, de façon à pouvoir recevoir tous les rayonnements 33 tombant sur les canaux en ayant traversé cette fenêtre 12. De façon bien connue, ces canaux, et plus particulièrement leur face 80 tournée vers la paroi transparente 12, sont recouverts d'un produit favorisant l'absorption, comme par exemple une peinture noire afin de permettre une absorption maximale des rayonnements.

Une extrémité 34 de ces canaux 31 plonge sensiblement au fond 35 du réservoir 30, du moins nettement et toujours en-dessous du niveau 50 du liquide contenu dans ce réservoir 30. L'autre extrémité 36 de ces canaux est reliée à une entrée 37 d'un collecteur 38 comportant une sortie 39. Cette sortie 39 est connectée à un conduit dit de récupération 40 ayant généralement une section plus importante que celle des canaux 31, afin de permettre un écoulement plus facile du fluide, tel qu'il sera explicité ci-après. L'autre extrémité 41 de ces conduits de récupération 40 est connectée à l'entrée 42 d'une première voie 43 d'un échangeur thermique dont la deuxième voie est constituée par l'enceinte 13. Cette première voie peut être constituée par exemple par un serpentin noyé dans le liquide contenu dans l'enceinte 13. La sortie 44 de cette voie 43 de l'échangeur thermique est reliée à une entrée 45 du réservoir 30. De cette façon, le réservoir 30, l'ensemble des canaux 31, le collecteur 38, les conduits de récupération 40, la première voie 43 de l'échangeur thermique et le collecteur 46 reliant la voie 43 de l'échangeur thermique au réservoir 30 constituent un circuit fermé dit circuit primaire, apte à être parcouru par le fluide contenu dans le réservoir 30 sous une forme liquide et/ou gazeuse.

Comme mentionné précédemment, le dispositif illustré sur les FIGURES 1 et 2 doit normalement être utilisé pour que le réservoir 30, et notamment le liquide qu'il contient, et plus particulièrement son niveau 50, soit situé en-dessous du point le plus bas de la voie 43 de l'échangeur thermique et en l'occurence sa sortie 44. De même, l'ensemble des éléments de sortie des extrémités 36 et du collecteur 38 sont situés à un point haut.

Selon le mode de réalisation du dispositif, le conduit de récupération 40 doit être associé à des moyens pour le maintenir à une certaine température déterminée comme il sera explicité ci-après. Dans une réalisation avantageuse, le conduit 40 est juste situé derrière la nappe 32 de canaux 31 par rapport à la fenêtre transparente 12, et plus particulièrement dans l'espace délimité entre cette nappe 32 et la face 15 de l'enveloppe isolante de l'enceinte 13. Ce conduit 40 peut même être, au moins partiellement, au contact thermique 82 avec la face arrière 81 de la nappe 32 des canaux 31. De toute façon, ce conduit de récupération 40 sera très avantageusement réalisé dans un matériau de faible conductivité thermique.

De plus, selon une caractéristique additionnelle très avantageuse, le conduit de récupération 40 comporte en série un siphon 70. Dans ces conditions, le conduit de récupération 40 forme dans un plan oblique au moins deux portions courbées 51 et 52 pour former le siphon 70, pour qu'une portion, en l'occurence la portion 51, puisse retenir du liquide et que celui-ci reste dans le conduit 51 au moins jusqu'au niveau 60. Par contre, si ce niveau est atteint, le fluide en excès s'écoule dans la partie 53 du conduit de récupération 40 pour retourner au réservoir 30 en parcourant éventuellement les moyens d'échange 43 plongés dans l'enceinte 13.

D'une façon générale, cet échangeur thermique constitué par la première voie 43 et la deuxième voie, en l'occurence l'enceinte 13 isolée par le matériau 14, constitue un échangeur à au moins deux voies parallèles. Ces échangeurs thermiques sont bien connus en eux-mêmes, et tout fluide parcourant l'une de ces voies permet de transférer de l'énergie calorifique au fluide parcourant la deuxième voie, et réciproquement, suivant la valeur relative des températures des fluides parcourant ces deux voies. Ils ne seront pas plus amplement décrits.

Le dispositif qui a été décrit ci-dessus en regard des FIGURES 1 et 2 fonctionne de la façon suivante :

Tout d'abord, il est supposé qu'il y a présence d'un rayonnement 33, par exemple un rayonnement solaire diurne. Dans ce cas, les canaux 31 s'échauffent, ainsi que le réservoir 30 qui n'est pas spécialement totalement isolé thermiquement, à une température $t_1$ qui est certainement supérieure à la température du fluide contenu dans l'enceinte 13 qui est considéré à la température $t_2$ généralement inférieure à $t_1$. De cette façon, le liquide volatil qui se trouve dans le réservoir 30 entre en ébullition et remonte sous une forme généralement biphasique, vapeur et liquide, dans les canaux pour arriver au niveau du collecteur 38 totalement en phase vapeur. Cette remontée dans les canaux 31 est essentiellement due à la surpression règnant dans le réservoir, au-dessus du niveau 50, qui croît au fur et à mesure de l'échauffement, d'une part, et à la dépression résultant de la condensation du gaz dans l'échangeur 43, d'autre part, ces différences de pression étant le moteur du phénomène de circulation.

Du fait de l'inclinaison naturelle du conduit 40, 44, le liquide ainsi reproduit retourne au réservoir 30. Bien entendu, il existe une constante de temps pour que le processus décrit ci-dessus se stabilise de façon continue. Si le rayonnement se maintient notablement, les échanges thermiques vont être assez élevés pour que la température $t_2$ du liquide contenu dans l'enceinte 13 augmente de manière substantielle. Cependant, il est évident que cette température sera toujours inférieure à $t_1$, quelle que soit cette valeur.

Si, maintenant, on admet que le rayonnement 33 cesse, comme par exemple pendant les périodes nocturnes, les canaux vont automatiquement se refroidir et redescendre à une température $t_4$. La valeur de cette température peut descendre à des valeurs de températures très froides, comme par exemple pendant les périodes nocturnes d'hiver. Cependant, comme l'enceinte 13 est isolée thermiquement, et généralement aussi relativement le circuit d'utilisation secondaire, le fluide contenu dans ce réservoir maintient sa température $t_2$, même si elle varie à une valeur supérieure à la valeur de $t_4$. Dans ce cas, cette source de chaleur relative que constitue l'enceinte 13 avec son fluide peut produire une volatilisation du liquide contenu dans le réservoir 30, ce qui entraînerait un cycle de sens inverse à celui décrit précédemment, c'est-à-dire une remontée du liquide volatil dans la première voie 43 de l'échangeur, éventuellement sous forme de vapeur, et celle-ci se recondenserait dans les canaux 31 pour retourner au réservoir 13, en s'écoulant par l'extrémité 34 de ces canaux. Le résultat de ce phénomène, s'il se produisait, serait un transfert des calories du liquide du circuit secondaire vers le circuit primaire, et donc vers l'atmosphère ambiante. Ce qui est tout à fait inconcevable pour un tel dispositif, car on en abaisserait la valeur du rendement total en n'utilisant pas l'inertie thermique du fluide du circuit secondaire et on ne pourrait, de ce fait, continuer à l'utiliser pendant les absences de rayonnement.

Pour pallier cet inconvénient, le conduit de récupération 40 qui a été décrit ci-avant est soumis à des moyens pour le maintenir à une température $t_3$ qui est comprise entre les températures $t_4$ et $t_2$ définies ci-dessus. Ces moyens sont, tout d'abord, dans ce mode de réalisation avantageux, le fait de disposer ce conduit de récupération derrière les canaux 31 qui sont en nappe continue par rapport à la paroi transparente 12 qui est au contact de l'air ambiant. Le conduit 40 est alors à la température $t_3$ qui est, dans ces conditions, supérieure à $t_4$.

Ceci a pour conséquence que les vapeurs qui sont produites dans la première voie 43 de l'échangeur sont alors condensées dans ce conduit de récupération 40, celui-ci ayant au moins un siphon 70 comme illustré, et même avantageusement une pluralité de siphons, qui peut donc recueillir, pendant les tout débuts de l'inversion des phénomènes quand la température des canaux passe de $t_1$ à $t_4$, une partie du liquide recondensé, commme il apparaît dans le coude 51, pour former ainsi, pour les éventuelles vaporisations ultérieures, un bouchon liquide réalisé naturellement sans apport d'élément extérieur au dispositif.

Dans une forme avantageuse, le siphon 70 sera situé entre les canaux 31 et l'entrée 42, pour empêcher le maximum de vapeur produite non intentionnellement comme décrit ci-dessus de sortir de l'échangeur.

0166661

Ces caractéristiques décrites et illustrées du dispositif selon l'invention montrent tous les avantages que procure un tel dispositif qui a, de ce fait, un rendement très élevé pour un prix de revient des plus faibles, puisqu'en fait il ne comporte que peu d'éléments et, qu'en plus, ceux-ci sont entièrement statiques.

Il faut, de plus, préciser que ces différentes caractéristiques ne nuisent en aucune façon au fonctionnement du cycle décrit précédemment en présence du rayonnement. En effet, le rayonnement qui échauffe les canaux échauffera aussi assez le conduit de récupération 40 pour vaporiser le liquide contenu dans le siphon 51.

REVENDICATIONS

1- Dispositif de captage et de transfert d'un rayonnement (33) émis de façon non continue, caractérisé par le fait qu'il comporte :

- un premier circuit dit circuit primaire apte à être parcouru par un premier fluide ayant une qualité de volatilité importante, cedit circuit primaire comportant, montés en série, d'une part un réservoir (30) dudit premier fluide en phase liquide et des cananux (31) aptes à être soumis audit rayonnement et à prendre au moins deux températures $t_1$ et $t_4$ suivant respectivement la présence ou l'absence de rayonnement, $t_4$ étant définie inférieure à $t_1$, et d'autre part un conduit de récupération (40,46),

- un deuxième circuit dit circuit secondaire (19,13,20) apte à être parcouru par un second fluide, cedit circuit seondaire étant substantiellement isolé thermiquement,

- un échangeur thermique à au moins une première (43) et une seconde (13) voies, la première voie (43) étant montée en série dans ledit conduit de récupéraion (40,46), et la deuxième voie (13) dans ledit circuit secondaire, de façon à ce que ledit second fluide soit amené à une température $t_2$, $t_2$ étant apte à être comprise entre $t_1$ et $t_4$, quand lesdits canaux (31) soumis au rayonnement sont amenés à la température $t_1$, et

- des moyens pour maintenir la partie dudit conduit de récupération (40) montée entre lesdits canaux et ladite première voie de l'échangeur à une température $t_3$ ayant une valeur comprise entre $t_2$ et $t_4$.

2- Dispositif selon la revendication 1, caractérisé par le fait que lesdits moyens consistent à positionner ladite partie du conduit de récupération (40) comprise entre lesdits canaux (31) et la première voie (43) de l'échangeur dans le même milieu (18) que celui desdits canaux, derrière lesdits canaux par rapport à la face de ceux-ci apte à recevoir ledit rayonnement (33).

3- Dispositif selon la revendication 1 ou 2, caractérisé par le fait que ladite partie du conduit de récupération (40) comporte en série au moins un siphon (70).

4- Dispositif selon l'une des revendications 1 à 3, caractérisé par le fait que ladite partie du conduit de récupération (40) est réalisée en un matériau de faible conductivité.

5- Dispositif selon la revendication 4, caractérisé par le fait que ladite partie de conduit de récupération a au moins une partie de paroi en contact thermique (82) avec lesdits canaux (31).

6- Dispositif selon l'une des revendications 3 à 5, caractérisé par le fait que ledit siphon (70) est situé le plus près possible de ladite première voie (43) de l'échangeur thermique.

0166661

fig. 1

fig. 2